(19) Europäisches Patentamt
European Patent Office
Office européen des brevets

(11) **EP 3 689 602 A1**

(12) **EUROPEAN PATENT APPLICATION**
published in accordance with Art. 153(4) EPC

(43) Date of publication:
**05.08.2020 Bulletin 2020/32**

(51) Int Cl.:
**B32B 27/18** (2006.01)     **B32B 21/08** (2006.01)
**B32B 27/00** (2006.01)     **E04B 1/94** (2006.01)

(21) Application number: **18863215.2**

(22) Date of filing: **27.09.2018**

(86) International application number:
**PCT/JP2018/036121**

(87) International publication number:
**WO 2019/065911 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2017   JP 2017192082**

(71) Applicant: **Dainippon Printing Co., Ltd.**
**Shinjuku-ku**
**Tokyo 162-8001 (JP)**

(72) Inventors:
• **HORIO, Yoshiaki**
  **Tokyo 162-8001 (JP)**
• **OGASAWARA, Takeru**
  **Tokyo 162-8001 (JP)**
• **FURUTA, Satoshi**
  **Tokyo 162-8001 (JP)**
• **HAMAGUCHI, Tomoyuki**
  **Tokyo 162-8001 (JP)**

(74) Representative: **Müller-Boré & Partner**
**Patentanwälte PartG mbB**
**Friedenheimer Brücke 21**
**80639 München (DE)**

(54) **COSMETIC SHEET AND COSMETIC PLATE**

(57)     The present invention provides a decorative sheet on which fire does not easily spread even when the decorative sheet is laminated on a base having low thermal conductivity, and a decorative plate that includes the decorative sheet laminated on a base.

The present invention provides a decorative sheet for laminating on a base having a thermal conductivity of less than 0.1 W/(m·K) on a side to which the decorative sheet is bonded, wherein
(1) the decorative sheet comprises non-halogen-based thermoplastic resin-containing layers,
(2) at least one of the non-halogen-based thermoplastic resin-containing layers is a layer containing a non-halogen-based flame retardant,
(3) the total thickness ($\mu$m) of the non-halogen-based thermoplastic resin-containing layers is referred to as x, and the percentage (mass%) of the total mass of the non-halogen-based flame retardant in the non-halogen-based thermoplastic resin-containing layers in 100 mass% of the total mass of the non-halogen-based thermoplastic resin-containing layers is referred to as y, and x and y satisfy the following equation (I),

$$y \geq 0.00008x^2 + 0.016x - 2.51 \ (\mathrm{I}),$$

(I),

(4) the content of the non-halogen-based flame retardant in each of the layers containing a non-halogen-based flame retardant is 8 mass% or more.

EP 3 689 602 A1

Fig. 3

**Description**

Technical Field

The present invention relates to a decorative sheet and a decorative plate.

Background Art

Conventionally, decorative sheets are laminated on the surface of various articles in order to impart designability. For example, as a decorative plate used on the floor surface of a building, a decorative sheet is laminated on a base.
Since such a decorative sheet is laminated on the surface of a building, it may be required to satisfy requirements to acquire certification of noncombustion, which indicate that the decorative sheet does not easily burn in case of fire. The requirements to acquire certification of noncombustion are predetermined requirements in regard to the total heat value, maximum heat generation rate, and generation of cracks and holes in the heat generation test in accordance with ISO5660-1 defined in Article 2 (9) of the Building Standards Act of Japan.
As such a non-flammable decorative sheet, Patent Literature 1, for example, suggests a decorative sheet in which a base sheet, a transparent resin layer, and a surface-protecting layer are laminated in this order, the thickness of each layer is in a specific range, and the decorative sheet contains a flame retardant.
The decorative sheet mentioned above has excellent nonflammability; however, it has not been examined whether the decorative sheet formed on a base has resistance against the spread of fire. For items constructed on the horizontal surface, such as decorative materials for floors, properties of suppressing the expansion of the burning area on the decorative sheet and preventing fire from easily spreading are important to provide evacuation time in case of fire.
In the decorative plate described above, a wooden base material is often used as a base. As a wooden base material, those having various structures are used. For example, a wooden base material in which a cork is laminated to impart warmth retention properties, cushioning properties, etc. to the surface of a wooden plate, such as medium-density fiberboard (MDF) or high-density fiberboard (HDF), is sometimes used.
In a decorative plate using the base described above, a cork having low thermal conductivity is used for the surface of the base, which reduces the thermal conductivity of the wooden base material to less than 0.1 W/(m·K). The above decorative plate is formed by laminating a decorative sheet on the base with low thermal conductivity; accordingly, the base acts as a heat-insulating material, and once the decorative sheet on the base catches fire and starts burning, it burns vigorously, and the fire spreads easily.
Accordingly, there is a demand for the development of a decorative sheet that has resistance against the spread of fire even when it is laminated on a base having low thermal conductivity, and a decorative plate that includes the decorative sheet laminated on a base, and that has resistance against the spread of fire.

Citation List

Patent Literature

PTL 1: JP2015-182379A

Summary of Invention

Technical Problem

An object of the present invention is to provide a decorative sheet on which fire does not easily spread even when the decorative sheet is laminated on a base having low thermal conductivity, and a decorative plate that includes the decorative sheet laminated on a base.

Solution to Problem

The present inventors conducted extensive research. As a result, they found that the object can be achieved by a decorative sheet for laminating on a base with a thermal conductivity of less than 0.1 W/(m·K), wherein the decorative sheet comprises a non-halogen-based thermoplastic resin-containing layers, at least one of the non-halogen-based thermoplastic resin-containing layers is a layer containing a non-halogen-based flame retardant, the total thickness (x) of the non-halogen-based thermoplastic resin-containing layers and the percentage (y) of the total mass of the non-halogen-based flame retardant(s) satisfy the specific equation, and the content of the non-halogen-based flame retardant in each of the layers containing a non-halogen-based flame retardant is in a specific range. The present invention was thus accomplished.

Specifically, the present invention relates to the following decorative sheets and decorative plates.

1. A decorative sheet for laminating on a base having a thermal conductivity of less than 0.1 W/(m·K) on a side to which the decorative sheet is bonded, wherein

(1) the decorative sheet comprises non-halogen-based thermoplastic resin-containing layers,
(2) at least one of the non-halogen-based thermoplastic resin-containing layers is a layer containing a non-halogen-based flame retardant,
(3) the total thickness (μm) of the non-halogen-based thermoplastic resin-containing layers is referred to as x, the percentage (mass%) of the total mass of the non-halogen-based flame retardant in the non-halogen-based thermoplastic resin-containing layers in 100 mass% of the total mass of the non-halogen-based thermoplastic resin-containing layers is referred to as y, and x and y satisfy the following equation (I),

$$y \geq 0.00008x^2 + 0.016x - 2.51 \ (I),$$

(4) the content of the non-halogen-based flame retardant in each of the layers containing a non-halogen-based flame retardant is 8 mass% or more.

2. The decorative sheet according to Item 1, wherein the non-halogen-based flame retardant is at least one member selected from phosphorus-based flame retardants or nitrogen-based flame retardants.

3. The decorative sheet according to Item 1 or 2, wherein the content of the non-halogen-based flame retardant in each of the layers containing a non-halogen-based flame retardant is 11 mass% or more.

4. The decorative sheet according to any one of Items 1 to 3, wherein the percentage y (mass%) of the total mass of the non-halogen-based flame retardant in the non-halogen-based thermoplastic resin-containing layers in 100 mass% of the total mass of the non-halogen-based thermoplastic resin-containing layers is 40 mass% or less.

5. The decorative sheet according to any one of Items 1 to 4, wherein the decorative sheet comprises a transparent resin layer as one of the non-halogen-based thermoplastic resin-containing layers, and the transparent resin layer has a thickness of 60 μm or more.

6. The decorative sheet according to any one of Items 1 to 5, further comprising a surface-protecting layer.

7. The decorative sheet according to Item 6, wherein the surface-protecting layer is an ionizing radiation curable resin layer.

8. The decorative sheet according to Item 7, wherein the ionizing radiation curable resin layer is an electron beam curable resin layer.

9. The decorative sheet according to any one of Items 6 to 8, wherein the surface-protecting layer has a thickness of 15 μm or more.

10. The decorative sheet according to any one of Items 6 to 9, wherein the surface-protecting layer comprises fine particles, and the fine particles have an average particle size greater than the thickness of the surface-protecting layer.

11. The decorative sheet according to Item 10, wherein the fine particles are in a form of a vesicle formed by a supercritical reverse phase evaporation method.

12. The decorative sheet according to any one of Items 1 to 11, wherein the decorative sheet has a total thickness of 150 μm or more.

13. The decorative sheet according to any one of Items 1 to 12, wherein the non-halogen-based flame retardant is in a form of a vesicle formed by a supercritical reverse phase evaporation method.

14. A decorative plate comprising the decorative sheet according to any one of Items 1 to 13 on a base, wherein the base has a thermal conductivity of less than 0.1 W/(m·K) on a side to which the decorative sheet is bonded.

15. The decorative plate according to Item 14, wherein the base comprises a cork layer on a decorative sheet side.

Advantageous Effects of Invention

In the decorative sheet of the present invention, fire does not readily spread even when the decorative sheet is laminated on a base having low thermal conductivity. Further, since the decorative plate of the present invention comprises the decorative sheet laminated on a base, fire does not readily spread.

Brief Description of Drawings

Fig. 1 is a schematic diagram illustrating an example of a layer structure of a decorative sheet according to the present invention.
Fig. 2 is a schematic view illustrating an example of a layer structure of a base constituting a decorative plate according to the present invention.
Fig. 3 is a schematic view illustrating an example of a layer structure of a decorative plate according to the present invention.
Fig. 4 is a schematic view illustrating a method of testing resistance against the spread of fire.
Fig. 5 is a schematic view illustrating a method of testing resistance against the spread of fire.
Fig. 6 is a graph showing a relationship between the total thickness (x) of non-halogen-based thermoplastic resin-containing layers and the flame retardant content (y) in the non-halogen-based thermoplastic resin-containing layers.

Description of Embodiments

The decorative sheet and the decorative plate of the present invention are described in detail below. In the decorative sheet of the present invention, the surface opposite to the side of the decorative sheet laminated on a base is so-called "front surface", which is a surface to be viewed when constructed on a floor or the like. Therefore, in the present specification, the direction of the surface of the decorative sheet opposite to the side to be laminated on the base is referred to as "above," and the opposite direction, that is, the direction of the surface to be laminated on the base is referred to as the "back" or "below." Similarly, in the present specification, the direction of the surface of the decorative plate on the decorative sheet side is referred to as "above," and the opposite direction, that is, the direction of the surface on the base material side is referred to as the "back" or "below."

1. Decorative Sheet

The decorative sheet of the present invention is a decorative sheet for laminating on a base having a thermal conductivity of less than 0.1 W/(m·K) on a side to which the decorative sheet is bonded, wherein

(1) the decorative sheet comprises non-halogen-based thermoplastic resin-containing layers,
(2) at least one of the non-halogen-based thermoplastic resin-containing layers is a layer containing a non-halogen-based flame retardant,
(3) the total thickness ($\mu$m) of the non-halogen-based thermoplastic resin-containing layers is referred to as x, and the percentage (mass%) of the total mass of the non-halogen-based flame retardant(s) in the non-halogen-based thermoplastic resin-containing layers in 100 mass% of the total mass of the non-halogen-based thermoplastic resin-containing layers is referred to as y, and x and y satisfy the following equation (I),

$$y \geq 0.00008x^2 + 0.016x - 2.51 \quad (I),$$

(4) the content of the non-halogen-based flame retardant in each of the layers containing a non-halogen-based flame retardant is 8 mass% or more.

Since the decorative sheet of the present invention has structures (1) to (4) above, even when it is laminated on a base having a thermal conductivity as low as less than 0.1 W (m·K), expansion of a burning area on the decorative sheet in case of fire is suppressed, and fire does not easily spread.

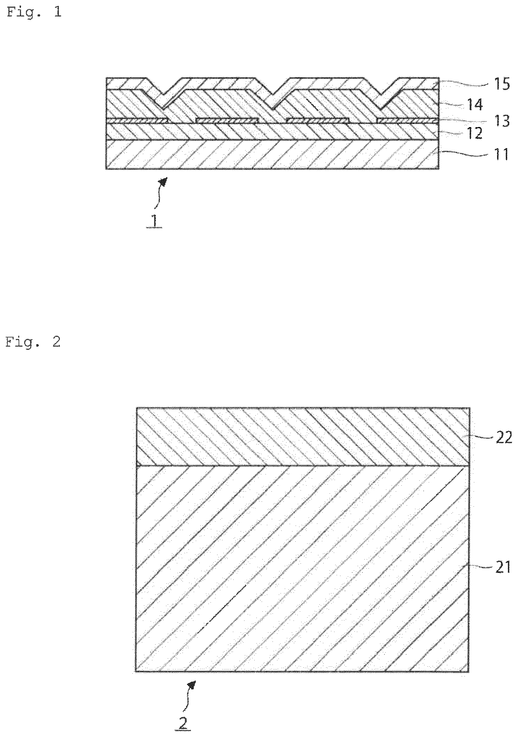

As long as the decorative sheet of the present invention satisfies requirements (1) to (4) above, the layer structure is not limited. Examples include a decorative sheet in which a picture pattern layer, a transparent adhesive layer, a transparent resin layer, a primer layer, and a surface-protecting layer are sequentially laminated on a base sheet, and optionally a synthetic resin backer layer is laminated on the back surface of the base sheet. As shown in Fig. 1 illustrating one example of the layer structure of the decorative sheet of the present invention, a layer structure may be such that a synthetic resin backer layer 11, a base sheet 12, a picture pattern layer 13, a transparent resin layer 14, and a surface-protecting layer 15 are laminated in this order. In one example of the layer structure, non-halogen-based thermoplastic resin-containing layers include a transparent resin layer, a base sheet, and a synthetic resin backer layer. A decorative sheet having such a layer structure is used as a typical example and is explained in detail below.

The decorative sheet of the present invention comprises layers that contain a non-halogen-based thermoplastic resin, and at least one of the non-halogen-based thermoplastic resin-containing layers comprises a non-halogen-based flame retardant. The non-halogen-based thermoplastic resin-containing layers are, for example, a transparent resin layer, a base sheet, and a synthetic resin backer layer described later, and at least one of these layers contains a non-halogen-based flame retardant. The non-halogen-based flame retardant is preferably contained in the base sheet or the synthetic resin backer layer, and more preferably in the base sheet, because the picture pattern layer is more easily recognized visually from the surface of the decorative sheet.

The non-halogen-based flame retardant is not particularly limited as long as it is a flame retardant free of a halogen element. Examples include phosphorus-based flame retardants, nitrogen-based flame retardants, aluminum-based flame retardants, antimony-based flame retardants, magnesium-based flame retardants, boron-based flame retardants, zirconium-based flame retardants, and the like. Of these, phosphorus-based flame retardants, nitrogen-based flame retardants, and magnesium-based flame retardants are preferable, and phosphorus-based flame retardants and nitrogen-based flame retardants are more preferable because the decorative sheet has increased resistance against the spread of fire. Nitrogen-based flame retardants are even more preferable because they are uncolored and can reduce environmental burden. Phosphorus-nitrogen-based flame retardants that contain phosphorus and nitrogen are also preferably used. These non-halogen-based flame retardants can be used singly or in a combination of two or more.

Examples of phosphorus-based flame retardants include phosphoric acid esters (e.g., tricresyl phosphate, trioctyl phosphate, and tris(monochloropropyl)phosphate), polyphosphates, and the like.

Examples of nitrogen-based flame retardants include inorganic nitrogen compounds such as ammonium carbonate, and organic nitrogen compounds such as melamine, melamine sulfate, melamine cyanurate, dicyandiamide, triazine compounds, and guanidine compounds (such as guanidine sulfamate). Examples of nitrogen-based flame retardants also include phosphorus-based nitrogen-based flame retardants (e.g., ammonium dihydrogen phosphate).

Examples of aluminum-based flame retardants include aluminum hydroxide, and the like.

Examples of antimony-based flame retardants include antimony trioxide, antimony pentoxide, barium metaborate antimonate, and the like.

Examples of magnesium-based flame retardants include magnesium hydroxide, and the like.

Examples of boron-based flame retardants include zinc borate, and the like.

In the decorative sheet of the present invention, when the total thickness ($\mu$m) of the non-halogen-based thermoplastic resin-containing layers is referred to as x, and the percentage (mass%) of the total mass of the non-halogen-based flame retardant(s) in the non-halogen-based thermoplastic resin-containing layers in 100 mass% of the total mass of the non-halogen-based thermoplastic resin-containing layers is referred to as y, x and y satisfy the following equation (I):

$$y \geq 0.00008x^2 + 0.016x - 2.51 \quad (I).$$

When equation (I) is not satisfied, the decorative sheet has insufficient resistance against the spread of fire.

In the above equation, x is the total thickness of non-halogen-based thermoplastic resin-containing layers. In the decorative sheet having the above layer structure, layers that contain a non-halogen-based thermoplastic resin are a transparent resin layer, a base sheet, and a synthetic resin backer layer; and x is the total thickness of these layers. x is preferably 120 to 600 $\mu$m, and more preferably 160 to 400 $\mu$m. x in the above ranges facilitates adjustment so that values x and y more easily satisfy equation (I).

In the above equation, y is the percentage (mass%) of the total mass of the non-halogen-based flame retardant(s) in the non-halogen-based thermoplastic resin-containing layers in 100 mass% of the total mass of the non-halogen-based thermoplastic resin-containing layers. In the decorative sheet having the above layer structure, non-halogen-based thermoplastic resin-containing layers are a transparent resin layer, a base sheet, and a synthetic resin backer layer; and the total mass of these layers is 100 mass%. y is the percentage (mass%) of the total mass of the non-halogen-based flame retardant(s) in these layers in 100 mass% of the total mass of these layers. y is preferably 8 mass% or more, and more preferably 11 mass% or more. Further, y is preferably 40 mass% or less, and more preferably 25 mass% or less. A lower limit of y within these ranges further increases the resistance of the decorative sheet against the spread of fire. An upper limit of y within these ranges further improves the surface smoothness and tensile strength of the layer containing a non-halogen-based flame retardant, which are required for processing such as printing and laminating.

The percentage (mass%) of the total mass of the non-halogen-based flame retardant(s) in the non-halogen-based thermoplastic resin-containing layers, which is represented by y as mentioned above, is a value calculated in the following manner. Specifically, the mass of each layer in the non-halogen-based thermoplastic resin-containing layers is obtained based on the thickness and specific gravity of each layer, and each of these is added together to obtain the total mass of all of the non-halogen-based thermoplastic resin-containing layers. Subsequently, the product of the thickness of the layer containing a non-halogen-based flame retardant, the specific gravity of the layer containing a non-halogen-based flame retardant, and the percentage of the non-halogen-based flame retardant in the layer is calculated to obtain the mass of the non-halogen-based flame retardant in the layer. When there are two or more layers containing a non-halogen-based flame retardant, the mass of the non-halogen-based flame retardant in each layer is obtained by the above method, and the total is calculated. Next, the total mass of the non-halogen-based flame retardants is divided by the total mass of all of the non-halogen-based thermoplastic resin-containing layers to calculate y.

The calculation method of y is explained here in more detail. For example, if the thickness and the specific gravity of the transparent resin layer are respectively 100 μm and 1.0, the thickness and the specific gravity of the base sheet are respectively 100 μm and 1.0, and the thickness and the specific gravity of the synthetic resin backer layer are respectively 100 μm and 1.0, then the total mass of all of the non-halogen-based thermoplastic resin-containing layers is 300 (g/m²). Assuming that the base sheet contains 30 mass% of the non-halogen-based flame retardant, the mass of the non-halogen-based flame retardant is 30 (g/m²). In this case, y is calculated to be 10 mass%.

The decorative sheet of the present invention may include a curable resin layer, such as a back-side primer layer; however, since the curable resin layer is different from the non-halogen-based thermoplastic resin layer, it is not considered in equation (I).

The content of the non-halogen-based flame retardant in each of the layers containing a non-halogen-based flame retardant is 8 mass% or more. If the content of the non-halogen-based flame retardant is less than 8 mass%, the decorative sheet does not have sufficient resistance against the spread of fire. The content of the non-halogen-based flame retardant is preferably 11 mass% or more, and more preferably 15 mass% or more. The content of the non-halogen-based flame retardant in the layer containing a non-halogen-based flame retardant is preferably 50 mass% or less, and more preferably 30 mass% or less. When the upper limit of the content of the non-halogen-based flame retardant is within the above range, the layer containing a non-halogen-based flame retardant exhibits more excellent strength.

Base Sheet

In the decorative sheet of the present invention, the base sheet is one of the non-halogen-based thermoplastic resin-containing layers. The base sheet is a synthetic resin sheet formed from polyolefin, polyester, polyacryl, polyamide, polyurethane, or polystyrene. Of these, when the base sheet is a layer containing a flame retardant, a synthetic resin sheet made from a polypropylene resin is preferable in terms of attaining more excellent strength.

The base sheet is preferably a layer containing a non-halogen-based flame retardant. The base sheet containing a non-halogen-based flame retardant ensures a highly safe and environmentally friendly decorative sheet.

The thickness of the base sheet is preferably 40 to 300 μm, and more preferably 60 to 200 μm. The base sheet may be colored if necessary. The base sheet may also be subjected to surface treatment, such as corona discharge treatment, plasma treatment, or ozone treatment. Alternatively, a primer, which is a base paint for improving adhesion to an adjacent layer, may be applied.

Picture Pattern Layer

The picture pattern layer is formed of a patterned layer and/or solid colored layer. The picture pattern layer can be formed by printing, such as gravure printing, offset printing, and silk screen printing. Examples of patterns on the patterned layer include wood grain patterns, marble grain patterns, textile patterns, leather patterns, geometric figures, characters, symbols, line drawings, various abstract patterns, and the like. The solid colored layer can be obtained by solid coloring. The picture pattern layer is formed of either the patterned layer or solid colored layer, or both.

The ink usable for the picture pattern layer can be obtained in the following manner. A mixture of one or more members selected from chlorinated polyethylene, chlorinated polypropylene and like chlorinated polyolefins; polyesters; polyurethanes formed from isocyanate and polyol; polyacrylic resins; polyvinyl acetates; polyvinyl chlorides; vinyl chloride-vinyl acetate copolymers; cellulose-based resins; polyamide-based resins; and the like is used as a vehicle. A pigment, solvent, various adjuvants, and the like are added to the mixture, and the result is formulated into an ink. Of these, from the viewpoint of environmental issues and adhesion to the printed surface, the use of a mixture of one or more members selected from polyesters, polyurethanes formed from isocyanate and polyol, polyacrylic resins, and polyamide-based resins is preferable.

## Transparent Adhesive Layer

The transparent adhesive layer is placed between the picture pattern layer and the transparent resin layer, as necessary. For example, the transparent adhesive layer can be obtained by applying and drying a known adhesive for use in dry lamination, such as a two-component curable urethane resin.

The thickness of the transparent adhesive layer after drying is preferably about 0.1 to 30 $\mu$m, and more preferably about 1 to 5 $\mu$m.

## Transparent Resin Layer

In the decorative sheet of the present invention, the transparent resin layer is one of the non-halogen-based thermoplastic resin-containing layers. The transparent resin layer can be suitably formed of a transparent non-halogen-based thermoplastic resin.

Specific examples of the non-halogen-based thermoplastic resin forming the transparent resin layer include polyethylene terephthalate, polybutylene terephthalate, polyamide, polyethylene, polypropylene, ethylene-vinyl acetate copolymers, ethylene-acrylic acid copolymers, ethylene-acrylic acid ester copolymers, ionomers, acrylic acid esters, methacrylic acid esters, and the like. Of these, polyolefin-based resins, such as polypropylene, are preferred.

The transparent resin layer is preferably a layer containing a non-halogen-based flame retardant. A transparent resin layer containing a non-halogen-based flame retardant ensures a highly safe and environmentally friendly decorative sheet.

The transparent resin layer may be colored as long as it has transparency. In this case, a colorant may be added to the thermoplastic resin. As the colorant, the pigments or dyes usable for the picture pattern layer may be used.

The transparent resin layer may contain various kinds of additives, such as a filler, a matting agent, a foaming agent, a lubricant, an antistatic agent, an antioxidant, an ultraviolet absorber, a light stabilizer, a radical scavenger, and a soft component (e.g., rubber).

The thickness of the transparent resin layer is preferably 60 $\mu$m or more, and more preferably 80 $\mu$m or more. The thickness of the transparent resin layer is preferably 300 $\mu$m or less, and more preferably 200 $\mu$m or less. A lower limit of the thickness of the transparent resin layer within the above ranges further increases the scratch resistance and wear resistance of the decorative sheet. An upper limit of the thickness of the transparent resin layer within the above ranges further increases the resistance of the decorative sheet against the spread of fire.

The surface of the transparent resin layer may be subjected to surface treatment, such as corona discharge treatment, ozone treatment, plasma treatment, ionizing radiation treatment, or dichromic acid treatment, as necessary. The surface treatment may be performed in accordance with usual treatment methods.

A primer layer (a primer layer for facilitating formation of a surface-protecting layer) may be formed on the surface of the transparent resin layer.

The primer layer can be formed by applying a known primer agent to the transparent resin layer. Examples of primer agents include urethane resin-based primer agents comprising an acrylic modified urethane resin, resin-based primer agents comprising a block copolymer of acryl and urethane, and the like.

The thickness of the primer layer is not particularly limited, but is generally about 0.1 to 10 $\mu$m, and preferably about 1 to 5 $\mu$m.

## Surface-protecting layer

A surface-protecting layer (transparent surface-protecting layer) is provided to render the surface physical properties that are required for a decorative sheet, such as scratch resistance, wear resistance, water resistance, and stain resistance. Resins for forming the surface-protecting layer preferably include at least one curable resin, such as a thermosetting resin or an ionizing radiation curable resin. In particular, an ionizing radiation curable resin is preferable from the viewpoint of high surface hardness, productivity, and the like. From the viewpoint of further increasing weather resistance, an electron beam curable resin is most preferable.

Examples of thermosetting resins include unsaturated polyester resins, polyurethane resins (including two-component curable polyurethane), epoxy resins, amino alkyd resins, phenol resins, urea resins, diallyl phthalate resins, melamine resins, guanamine resins, melamine-urea copolycondensation resins, silicone resins, polysiloxane resins, and the like.

These resins may contain crosslinking agents, curing agents (e.g., polymerization initiators), and polymerization accelerators. Examples of curing agents include isocyanate, organic sulfonic acid salts, etc., which can be added to unsaturated polyester resins, polyurethane resins, or the like; organic amines etc., which can be added to epoxy resins; peroxides, such as methyl ethyl ketone peroxide; and radical initiators, such as azoisobutylnitrile, which can be added to unsaturated polyester resins.

As the method for forming the surface-protecting layer using a thermosetting resin, for example, a solution of a thermosetting resin is applied by a coating method, such as roll coating or gravure coating, followed by drying and curing. The amount of the solution to be applied is about 5 to 50 μm, and preferably about 5 to 40 μm on a solids basis.

The ionizing radiation curable resin is not limited as long as it induces a crosslinking polymerization reaction upon irradiation with ionizing radiation and is converted into a three-dimensional polymer structure. For example, one or more types of prepolymers, oligomers, and monomers that have, in the molecule, a polymerizable unsaturated bond crosslinkable by irradiation with ionizing radiation, or an epoxy group can be used. Examples include acrylate resins, such as urethane acrylate, polyester acrylate, and epoxy acrylate; silicone resins, such as siloxane; polyester resins; epoxy resins; and the like.

Examples of ionizing radiation include visible rays, ultraviolet rays (near-ultraviolet rays, vacuum ultraviolet rays, etc.), X rays, electron beams, ionic lines, etc. Of these, ultraviolet rays and electron beams are preferable, and electron beams are more preferable.

Examples of the source of ultraviolet rays include ultra-high-pressure mercury lamps, high-pressure mercury lamps, low-pressure mercury lamps, carbon arc lamps, black-light fluorescent lamps, metal halide lamps, and like light sources. The wavelength of ultraviolet rays is about 190 to 380 nm.

Examples of the source of electron beams include various electron beam accelerators, such as Cockoroft-Walton, Van de Graaff, resonance transformer, insulated core transformer, linear, Dynamitron, and high-frequency accelerators. The energy of the electron beam is preferably about 100 to 1000 keV, and more preferably about 100 to 300 keV. The exposure dose of the electron beam is preferably about 20 to 150 kGy.

Although the ionizing radiation curable resin is sufficiently cured by irradiation with an electron beam, it is preferable to add a photopolymerization initiator (sensitizer) when the resin is cured by irradiation with ultraviolet rays.

The photopolymerization initiator used in the case of a resin having a radically polymerizable unsaturated group is, for example, at least one of the following: acetophenones, benzophenones, thioxanthones, benzoin, benzoin methyl ether, Michler's benzoyl benzoate, Michler's ketone, diphenyl sulfide, dibenzyl disulfide, diethyl oxide, triphenyl biimidazole, isopropyl-N,N-dimethylaminobenzoate, and the like. Moreover, the photopolymerization initiator used in the case of a resin having a cation polymerizable functional group is, for example, at least one of the following: aromatic diazonium salts, aromatic sulfonium salts, metallocene compounds, benzoin sulfonate, furyloxy sulfoxonium diallyliodosyl salts, and the like.

The amount of the photopolymerization initiator added is not particularly limited. The amount is generally about 0.1 to 10 parts by mass, relative to 100 parts by mass of the ionizing radiation curable resin.

As a method for forming a protecting layer using an ionizing radiation curable resin, for example, a solution of the ionizing radiation curable resin may be applied by a coating method such as gravure coating or roll coating. The amount of the solution to be applied is about 10 to 50 μm, and preferably about 15 to 40 μm on a solids basis.

The present invention preferably includes a surface-protecting layer. The thickness of the surface-protecting layer is preferably 10 μm or more, and more preferably 15 μm or more. The thickness of the surface-protecting layer is 50 μm or less, and more preferably 40 μm or less. A lower limit of the thickness of the surface-protecting layer within the above ranges further increases the scratch resistance and wear resistance of the decorative sheet. An upper limit of the thickness of the surface-protecting layer within the above ranges further increase the resistance of the decorative sheet against the spread of fire.

In order to further render scratch resistance and wear resistance to the surface-protecting layer formed from an ionizing radiation curable resin, fine particles may be added. Examples of the fine particles include inorganic fillers. Examples of the inorganic fillers include aluminum oxide powder, silicon carbide, silicon dioxide, calcium titanate, barium titanate, magnesium pyroborate, zinc oxide, silicon nitride, zirconium oxide, chrome oxide, iron oxide, boron nitride, diamond, emery, glass fiber, and the like.

The average particle size of the fine particles is not particularly limited, and is preferably greater than the thickness of the surface-protecting layer. Fine particles having an average particle size greater than the thickness of the surface-protecting layer further increase the scratch resistance and wear resistance of the decorative sheet. The average particle size of the fine particles is preferably 5 to 30 μm, and more preferably 10 to 20 μm.

In the present specification, the average particle size is a value measured with an LS230 particle size distribution analyzer (trade name: produced by Beckman Coulter).

The amount of the inorganic filler added is about 1 to 80 parts by mass relative to 100 parts by mass of the ionizing radiation curable resin.

Synthetic Resin Backer Layer

In the decorative sheet of the present invention, the synthetic resin backer layer is one of the non-halogen-based thermoplastic resin-containing layers. The decorative sheet of the present invention preferably includes a synthetic resin backer layer as the lowest layer of the decorative sheet, i.e., on the base side of the decorative sheet. Containing the synthetic resin backer layer further increases the impact resistance of a decorative material.

Examples of reins forming the synthetic resin backer layer include polypropylene, ethylene-vinyl alcohol copolymer, polymethylene, polymethylpentene, polyethylene terephthalate, highly heat-resistant polyalkylene terephthalates (e.g., polyethylene terephthalate wherein a part of the ethylene glycol is substituted with 1,4-cyclohexane dimethanol, diethylene glycol, or the like; for example, product name PET-G (produced by Eastman Chemical Company)), polybutylene terephthalate, polyethylene naphthalate, polyethylene naphthalate-isophthalate copolymer, polycarbonate, polyarylate, polyimide, polystyrene, polyamide, ABS, and the like. These resins may be used singly or in a combination of two or more.

The thickness of the synthetic resin backer layer is preferably 0.1 to 0.6 mm, more preferably 0.15 to 0.45 mm, and even more preferably 0.20 to 0.40 mm. A lower limit of the thickness of the synthetic-resin backer layer within these ranges further increases the impact resistance of the decorative sheet. An upper limit of the thickness of the synthetic-resin backer layer within these ranges further reduces or prevents warpage of the decorative sheet.

Each of the layers explained above may be laminated, for example, in the following manner. A picture pattern layer (solid colored layer and/or patterned layer) is formed on one surface of the base sheet by printing. Thereafter, a transparent resin layer is formed on the picture pattern layer by a dry lamination method, T-die extrusion method, or the like, with a known adhesive for use in dry lamination, such as a two-component curable urethane resin. A surface-protecting layer is further formed on it to form an intermediate, and the synthetic resin backer layer prepared by the T-die extrusion method or the like is laminated on the base sheet side of the intermediate by thermal lamination.

The total thickness of the decorative sheet is preferably 150 $\mu$m or more, and more preferably 160 $\mu$m or more. The total thickness of the decorative sheet is preferably 600 $\mu$m or less, and more preferably 400 $\mu$m or less. A lower limit of the total thickness of the decorative sheet within the above ranges further increases the scratch resistance and wear resistance of the decorative sheet. An upper limit of the total thickness of the decorative sheet within the above ranges further increases the resistance of the decorative sheet against the spread of fire.

Embossing may be performed on the decorative sheet from the transparent resin layer side or the surface-protecting layer side to provide a projection and depression pattern. The projection and depression pattern can be formed by hot press, hairline processing, or the like. Examples of the projection and depression patterns include wood-grain vessel patterns, stone-sheet surface projection-depression patterns, textile surface textures, matte patterns, grain patterns, hairline patterns, and linear streak patterns, and the like.

In the present specification, the layer thickness, such as the total thickness of the decorative sheet, is a value measured at a portion where the projection and depression pattern is not formed.

The various additives to be added to the layers of the decorative sheet of the present invention described above (fine particles contained in the surface-protecting layer, a non-halogen-based flame retardant contained in the non-halogen-based thermoplastic resin-containing layers, or the like) are preferably formed into vesicles. Examples of the method for forming various additives into vesicles are not particularly limited, and known methods may be used to form the vesicles. Among various methods, the supercritical reverse phase evaporation method is preferable.

The supercritical reverse phase evaporation method is specifically explained below. The supercritical reverse phase evaporation method refers to a method of adding an aqueous phase containing various additives as water-soluble or hydrophilic encapsulation materials to a mixture in which a material for forming the outer membrane of the vesicle is evenly dissolved in carbon dioxide in a supercritical state or carbon dioxide at a temperature or a pressure condition equal to or greater than the supercritical point, thereby forming a capsule-like vesicle in which the various additives as encapsulation materials are encapsulated with a single membrane. "Carbon dioxide in a supercritical state" refers to carbon dioxide in a supercritical state at a temperature equal to or greater than the critical temperature (30.98°C), and a pressure equal to or greater than the critical pressure (7.3773 ± 0.0030 MPa); and "carbon dioxide at a temperature or a pressure condition equal to or greater than the critical point" refers to carbon dioxide under a condition in which only the critical temperature or only the critical pressure exceeds the critical condition. This method can produce a single-walled lamellar vesicle having a diameter of 50 to 800 nm. "Vesicle" is the general name of a folliculus having a spherically closed membrane structure containing a liquid phase. In particular, those having an outer membrane formed of a biological lipid, such as a phospholipid, are called "liposomes."

Examples of phospholipids include phosphatidylcholine, phosphatidylethanolamine, phosphatidylserine, phosphatidic acid, phosphatidylglycerol, phosphatidylinositol, cardiolipin, egg yolk lecithin, hydrogenated egg yolk lecithin, soybean lecithin, hydrogenated soybean lecithin, and like glycerophospholipids; and sphingomyelin, ceramide phosphorylethanolamine, ceramide phosphorylglycerol, and like sphingophospholipids.

Other examples of the materials constituting the outer layer include nonionic surfactants; and dispersants, such as a mixture of these surfactants and cholesterols or triacylglycerols.

Examples of nonionic surfactants include one or more members selected from polyglycerolether, dialkylglycerol, polyoxyethylene hardened castor oil, polyoxyethylene alkylether, polyoxyethylene sorbitan fatty acid ester, sorbitan fatty acid ester, polyoxyethylene polyoxypropylene copolymers, polybutadiene-polyoxyethylene copolymers, polybutadiene-poly2-vinylpyridine, polystyrene-polyacrylic acid copolymers, polyethylene oxide-polyethyl ethylene copolymers, polyoxyethylene-polycaprolactam copolymers, and the like.

Examples of the cholesterols include one or more members selected from cholesterol, $\alpha$-cholestanol, $\beta$-cholestanol, cholestane, desmosterol(5,24-cholestadiene-3$\beta$-ol), sodium cholate, cholecalciferol, and the like.

The outer membrane of the liposome may be formed from a mixture of a phospholipid and a dispersant. By forming an outer layer as a liposome formed of a phospholipid, the decorative sheet of the present invention ensures desirable compatibility between the resin composition, which is the main component of each layer, and various additives.

Since the decorative sheet of the present invention has the above structure, fire does not readily spread even when the decorative sheet is laminated on a base having low thermal conductivity. Accordingly, the decorative sheet of the present invention can be used as a decorative sheet for laminating on a base having a thermal conductivity of less than 0.1 W/(m·K), and even when the decorative sheet is laminated on such a base, fire does not easily spread. For this reason, the decorative sheet of the present invention can be preferably used as a decorative sheet for interior materials, and particularly preferably as a decorative sheet for floors.

2. Decorative Plate

The decorative plate of the present invention is a decorative plate including the decorative sheet mentioned above on a base, wherein the base has a thermal conductivity of less than 0.1 W/(m·K) on the side to which the decorative sheet is bonded.

As a decorative sheet constituting the decorative plate of the present invention, the decorative sheet of the present invention described above can be used.

Base

The base constituting the decorative plate of the present invention has a thermal conductivity of less than 0.1 W/(m·K). The thermal conductivity of the base may be less than 0.08 W/(m·K). In the present specification, the thermal conductivity of the base is a value measured by a hot disc method.

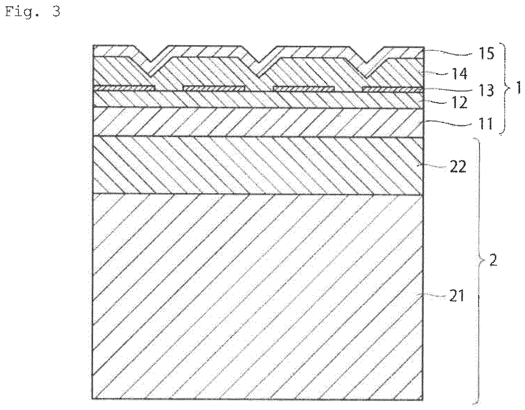

The material of the base is not particularly limited as long as it exhibits a thermal conductivity in the above range. For example, as shown in Fig. 2, a wooden base material obtained by laminating a surface material 22 made of a material having a thermal conductivity in the above range on a wooden plate 21 usually used for a decorative plate such as a floor decorative plate may be used. Fig. 3 shows an example of the layer structure of the decorative plate of the present invention that uses the base shown in Fig. 2. In Fig. 3, the surface material 22 of the base 2 and the synthetic resin backer layer 11 of the decorative sheet 1 are bonded, and the decorative sheet 1 is thereby laminated on the base material 2 to form a decorative plate.

The surface material can be made of any material having a thermal conductivity in the above range. Examples include cork, paulownia, and the like. Of these, cork is preferably used because warmth retention properties and cushioning properties can be imparted to the decorative plate. That is, the base preferably includes a cork layer on the decorative sheet side.

The thickness of the surface material is not particularly limited, and is preferably 1.0 to 5.0 mm, and more preferably 1.0 to 2.0 mm.

The wooden plate is not particularly limited, and examples include medium-density fiberboard (MDF), high-density fiberboard (HDF), and plywood. Of these, medium-density fiberboards (MDF) and high-density fiberboards (HDF) are preferably used.

The thickness of the wooden plate is not particularly limited, and is preferably 4.0 to 15.0 mm, and more preferably 5.0 to 10.0mm.

The method of laminating the surface material and the wooden plate is not particularly limited, and lamination can be performed by a conventionally known method, e.g., by using an adhesive. The adhesive is not particularly limited, and known woodworking adhesives may be widely used. Examples of adhesives include adhesives containing, as an active ingredient, polyvinyl acetate, polyvinyl chloride, vinyl chloride-vinyl acetate copolymers, ethylene-acrylic acid copolymers, ionomers, butadiene-acrylic nitrile rubber, neoprene rubber, natural rubber, or the like. Examples also include thermosetting adhesives, such as melamine-based adhesives, phenol-based adhesives, urea-based (vinyl acetate-urea-based) adhesives, and the like.

The method for laminating the decorative sheet on the front surface of the base is not particularly limited. The decorative sheet may be laminated by a conventionally known method, e.g., by forming an adhesive layer on the front surface of the base.

The thickness of the adhesive layer is not particularly limited, and the thickness after drying is preferably 0.1 to 100 $\mu$m, more preferably 0.1 to 30 $\mu$m, and still more preferably 1 to 20 $\mu$m.

Examples of the adhesive used in the adhesive layer include water-soluble emulsion-based adhesives, polyester-based adhesives, acrylic adhesives, and urethane-based adhesives. These adhesives can be used singly or in a combination of two or more.

Since the decorative plate of the present invention has the above structure, fire does not easily spread. For this reason, the decorative plate of the present invention can be suitably used as a decorative plate for interior materials, especially as a decorative plate for floors.

Examples

The present invention is described in more detail below with reference to Examples and Comparative Examples. However, the present invention is not limited to these.

Example 1

Formation of Decorative Sheet

A 60-$\mu$m-thick polypropylene film (specific gravity: 1.02) was prepared as a base sheet. Subsequently, both surfaces of the base sheet were subjected to corona discharge treatment, then a back-side primer layer formed from a two-component curable urethane resin was formed on the back surface of the base sheet, and a picture pattern layer was formed on the front surface of the base sheet using an acrylic urethane-based resin-containing curable printing ink by a gravure printing method. Moreover, an adhesive of two-component-curable urethane resin was applied to the picture pattern layer to form a transparent adhesive layer. Further, a polypropylene resin was thermally melted and extruded on the adhesive layer using a T-die extruder, thereby forming a thermoplastic transparent resin layer (thickness: 100 $\mu$m, specific gravity: 0.90).

Subsequently, a two-component curable urethane resin primer layer was formed on the transparent resin layer. Moreover, an electron beam curable resin composition containing a urethane (meth) acrylate oligomer was applied to the primer layer by a gravure coating method, followed by drying, after which irradiation with an electron beam was conducted in an environment at an acceleration voltage of 175 KeV with a dose of 5 Mrad (50 kGy), thereby forming a surface-protecting layer having a thickness of 15 $\mu$m. Silica was added as fine particles to the surface-protecting layer. The average particle size of the silica was 18 $\mu$m.

Additionally, embossing was performed from the surface-protecting layer side by thermal pressure to form a wood-grain vessel projection-depression pattern.

Subsequently, a resin composition containing a polypropylene resin and a phosphorus-nitrogen-based flame retardant (FP-2500S, produced by ADEKA Corporation) was prepared. The content of the phosphorus-nitrogen-based flame retardant in the resin composition was 30 mass%. A resin layer made of the resin composition was laminated on the back surface of the base sheet by a melt-extrusion lamination method to thereby form a 240-$\mu$m-thick synthetic resin backer layer (specific gravity: 1.08). Thus, the decorative sheet of Example 1 was formed.

The decorative sheet includes a curable resin layer, such as a back-side primer layer; however, since the curable resin layer is different from the non-halogen-based thermoplastic resin layer, it is not considered in equation (I).

Formation of Decorative Plate

A cork sheet having a thickness of 1.5 mm and a thermal conductivity of 0.07 W/(m·K) was bonded to 4-mm-thick medium-density fiberboard (MDF) with an adhesive to prepare a wooden base material. The synthetic resin backer layer side of the decorative sheet was bonded to the cork sheet side of the wooden base material with a water-soluble emulsion-based adhesive to prepare a decorative plate. The water-soluble emulsion-based adhesive for use was the following:

- Water-soluble emulsion-based adhesive

Base Resin: BA-10L, Japan Coating Resin Co., Ltd., modified-ethylene-vinyl acetate-based resin
Curing Agent: BA-11B, Japan Coating Resin Co., Ltd., isocyanate-based agent
Compositional Ratio: Base Resin: curing agent=100:2.5 (on a mass basis)

Examples 2 to 23, Comparative Examples 1 to 9, and Reference Example 1

Decorative sheets and decorative plates were formed in the same manner as in Example 1 except that the structure of the decorative sheet was changed to those described in Tables 1 to 3. In the tables, "0" in the column of the layer thickness of the backer layer indicates that the backer layer is not formed.

Evaluation

The decorative sheets and decorative plates of the Examples and Comparative Examples produced as above were evaluated in the following manner.

(1) Strength of Layer Containing Non-Halogen-Based Flame Retardant

The strength of the layer containing a non-halogen-based flame retardant was evaluated by measuring the maximum point strength. Specifically, a layer containing a non-halogen-based flame retardant was punched into a dumbbell shape in accordance with JIS K6732: 2006 to obtain a test piece. The maximum point strength of the test piece was measured using a tensile tester at a tensile rate of 100 mm/min and a 80-mm distance between chucks, and evaluated according to the following evaluation criteria.
++: The maximum point strength was 6 N or more.
+: The maximum point strength was 4 N or more and less than 6 N.
-: The maximum point strength was less than 4 N.

(2)Resistance against Spread of Fire

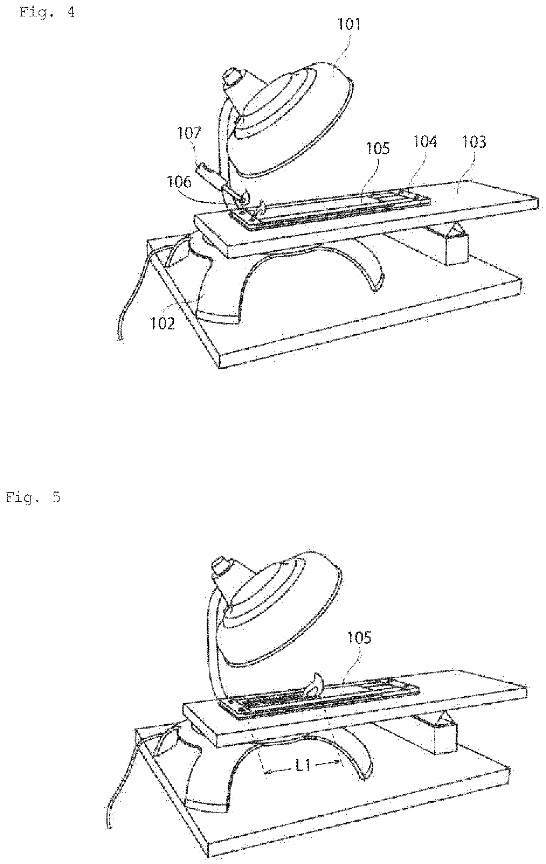

The decorative plate was cut out to a size of 9 cm x 30 cm to make a test piece. As shown in Figs. 4 and 5, a rectangular metal stand 103 was placed on a stand 102 of a commercially available household heater 101 (Zaigle Handsome SJ-100 (trade name)), and a test piece 105 was placed in a metal frame 104 set on the stand. The resistance against the spread of fire was tested under the conditions of a heater angle of 45° and a heater output dial of 4. Specifically, the test piece was pre-heated for 2 minutes using the household heater. Then, as shown in Fig. 4, the end 106 on the heater side in the longitudinal direction of the test piece was heated with a lighter 107 for 1 minute and ignited, and the fire spread in the longitudinal direction of the test piece 105 as shown in Fig. 5. Subsequently, the state of the spread of fire was visually observed for 17 minutes, and the fire spread distance (L1) was measured. According to the following evaluation criteria, the fire extinguishing property and the fire spread distance were measured to evaluate the resistance against the spread of fire.

Fire Extinguishing Properties

++: The fire went out by itself.
-: The fire did not go out by itself.

Fire Spread Distance (L1)

++: L1 was 10 cm or less.
+: L1 was over 10 cm and was 20 cm or less.
-: L1 was over 20 cm.

Evaluation of Resistance against Spread of Fire

+++: The fire extinguishing properties and the fire spread distance were determined to be ++.
++: The fire extinguishing properties were determined to be ++, and the fire spread distance was determined to be +.
-: At least one of the fire extinguishing properties or the fire spread distance was determined to be -.

(3) Scratch Resistance

The scratch resistance of a decorative sheet was examined using a Hoffman scratch tester (produced by BYK-Gardner). Specifically, a decorative sheet was bonded to 2.5-mm-thick MDF using an adhesive (water-soluble emulsion adhesive (BA-10L/BA-11B)) to prepare a test piece. A scratch blade (the edge portion of a 7-mm-diameter cylinder) was set so as to be in contact with the surface-protecting layer of the test piece at an angle of 45°, and the scratch blade was pulled to scratch the surface. In this test, the load applied to the scratch blade was changed in 100-g increments within the range of 100 to 700 g, and whether a scratch was formed on the surface-protecting layer was investigated. A load with which scratch was made for the first time was defined as a scratch load, and evaluation was conducted according to the following evaluation criteria.

++: The scratch load was a 600-g load or more.

+: The scratch load was a 400-g load or a 500-g load.

-: The scratch load was a 300-g load or less.

(4) Wear Resistance Test

The wear resistance of a decorative sheet was confirmed. Specifically, a decorative sheet was bonded to 2.5-mm-thick MDF using an adhesive (water-soluble emulsion adhesive (BA-10L/BA-11B)) to prepare a test piece. Using the test piece, a test was performed according to JAS flooring wear test A. The surface condition of the decorative sheet of each test piece after the test was visually observed and evaluated according to the following evaluation criteria.

++: Shaving of the picture pattern layer was not observed after a 500 rotation test.

-: Shaving of the picture pattern layer was observed after a 500 rotation test.

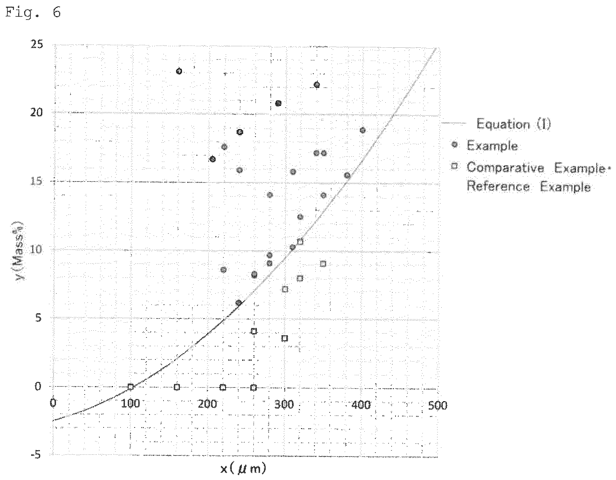

Tables 1 to 3 show the results. Fig. 6 shows the relationship between the total thickness (x) of the non-halogen-based thermoplastic resin-containing layers and the percentage (y) of the total mass of the non-halogen-based flame retardant in the non-halogen-based thermoplastic resin-containing layers in 100 mass% of the total mass of the non-halogen-based thermoplastic resin-containing layers. Tables 1 to 3 and Fig. 6, for reference, show the value of $y = 0.00008x^2+0.016x-2.51$, which indicates the threshold value of y in equation (I), and a graph.

Table 1

| | | | Example 1 | Example 2 | Example 3 | Example 4 | Example 5 | Example 6 | Example 7 | Example 8 | Example 9 |
|---|---|---|---|---|---|---|---|---|---|---|---|
| Layer thickness | Surface-protecting layer ($\mu$m) | | 15 | 15 | 15 | 15 | 15 | 15 | 15 | 15 | 15 |
| | Non-halogen-based thermoplastic resin-containing layer | Transparent resin layer ($\mu$m) | 100 | 100 | 100 | 100 | 100 | 100 | 100 | 160 | 160 |
| | | Base sheet ($\mu$m) | 60 | 60 | 105 | 140 | 190 | 240 | 120 | 120 | 150 |
| | | Backer layer ($\mu$m) | 240 | 190 | 0 | 0 | 0 | 0 | 0 | 0 | 0 |
| | x ($\mu$m) | | 400 | 350 | 205 | 240 | 290 | 340 | 220 | 280 | 310 |
| Content of flame retardant | The content (mass%) of flame retardant in layer containing flame retardant | | 30 | 30 | 30 | 30 | 30 | 30 | 30 | 30 | 30 |
| | Layer containing flame retardant | | Backer layer | Backer layer | Base sheet | Base sheet | Base sheet | Base sheet | Base sheet | Base sheet | Base sheet |
| | y (mass%) | | 18.9 | 17.3 | 16.7 | 18.8 | 20.9 | 22.3 | 17.7 | 14.2 | 15.9 |
| Reference | $y=0.00008x^2+0.016x-2.51$ | | 16.7 | 12.9 | 4.1 | 5.9 | 8.9 | 12.2 | 4.9 | 8.2 | 10.1 |
| Resistance against spread of fire | Fire extinguishing properties | | ++ | ++ | ++ | ++ | ++ | ++ | ++ | ++ | ++ |
| | Fire Spread distance | | + | ++ | + | ++ | ++ | ++ | + | + | + |
| | Evaluation of resistance against spread of fire | | ++ | +++ | ++ | +++ | +++ | +++ | ++ | ++ | ++ |
| Scratch resistance | | | ++ | ++ | ++ | ++ | ++ | ++ | ++ | ++ | ++ |
| Wear resistance | | | ++ | ++ | ++ | ++ | ++ | ++ | ++ | ++ | ++ |
| Strength of layer containing non-halogen-based frame retardant | | | ++ | ++ | ++ | ++ | ++ | ++ | ++ | ++ | ++ |

Table 2

| | | | Ex. 10 | Ex. 11 | Ex. 12 | Ex. 13 | Ex. 14 | Ex. 15 | Ex. 16 | Ex. 17 | Ex. 18 | Ex. 19 | Ex. 20 | Ex. 21 | Ex. 22 | Ex. 23 |
|---|---|---|---|---|---|---|---|---|---|---|---|---|---|---|---|---|
| Layer thickness | | Surface-protecting layer ($\mu$m) | 15 | 15 | 15 | 15 | 15 | 15 | 15 | 30 | 15 | 15 | 15 | 15 | 15 | 15 |
| | Non-halogen-based thermoplastic resin-containing layer | Transparent resin layer ($\mu$m) | 160 | 200 | 200 | 200 | 160 | 160 | 160 | 100 | 100 (PET) | 100 | 100 | 60 | 50 | 60 |
| | | Base sheet ($\mu$m) | 180 | 120 | 150 | 180 | 100 | 120 | 150 | 140 | 140 | 60 (PE) | 120 | 220 | 210 | 180 |
| | | Backer layer ($\mu$m) | 0 | 0 | 0 | 0 | 0 | 0 | 0 | 0 | 0 | 0 | 0 | 0 | 0 | 0 |
| | x ($\mu$m) | | 340 | 320 | 350 | 380 | 260 | 280 | 310 | 240 | 240 | 160 | 220 | 280 | 260 | 240 |
| Content of flame retardant | The content (mass%) of flame retardant in layer containing flame retardant | | 30 | 30 | 30 | 30 | 20 | 20 | 20 | 30 | 30 | 50 | 15 | 12 | 10 | 8 |
| | Layer containing flame retardant | | Base sheet | Base sheet | Base sheet | Base sheet | Base sheet | Base sheet | Base sheet | Base sheet | Base sheet | Base sheet | Base sheet | Base sheet | Base sheet | Base sheet |
| | y (mass%) | | 17.2 | 12.6 | 14.2 | 15.6 | 8.3 | 9.2 | 10.3 | 18.8 | 15.9 | 23.1 | 8.6 | 9.7 | 8.3 | 6.2 |
| Reference | $y=0.00008x^2+0.016x-2.51$ | | 12.2 | 10.8 | 12.9 | 15.1 | 7.1 | 8.2 | 10.1 | 5.9 | 5.9 | 2.1 | 4.9 | 8.2 | 7.1 | 5.9 |
| Resistance against spread of fire | Fire extinguishing properties | | ++ | ++ | ++ | ++ | ++ | ++ | ++ | ++ | ++ | ++ | ++ | ++ | ++ | ++ |
| | Fire Spread distance | | + | + | + | + | + | + | + | ++ | + | + | + | + | + | + |
| | Evaluation of resistance against spread of fire | | ++ | ++ | ++ | ++ | ++ | ++ | ++ | +++ | ++ | ++ | ++ | ++ | ++ | ++ |
| Scratch resistance | | | ++ | ++ | ++ | ++ | ++ | ++ | ++ | +++ | ++ | ++ | ++ | ++ | + | ++ |
| Wear resistance | | | ++ | ++ | ++ | ++ | ++ | ++ | ++ | ++ | ++ | ++ | ++ | + | ++ | + |
| Strength of layer containing non-halogen-based frame retardant | | | ++ | ++ | ++ | ++ | ++ | ++ | ++ | ++ | ++ | + | ++ | ++ | ++ | ++ |

Table 3

| | | | Camp. Ex. 1 | Comp. Ex. 2 | Comp. Ex. 3 | Camp. Ex. 4 | Comp. Ex. 5 | Comp. Ex. 6 | Comp. Ex. 7 | Comp. Ex. 8 | Comp. Ex. 9 | Reference Example 1 |
|---|---|---|---|---|---|---|---|---|---|---|---|---|
| Layer thickness | Surface-protecting layer ($\mu$m) | | 15 | 15 | 15 | 15 | 15 | 15 | 15 | 15 | 15 | 5 |
| | Non-halogen-based thermoplastic resin-containing layer | Transparent resin layer ($\mu$m) | 100 | 100 | 160 | 200 | 200 | 200 | 200 | 160 | 200 | 40 |
| | | Base sheet ($\mu$m) | 60 | 60 | 60 | 60 | 100 | 120 | 150 | 100 | 100 | 60 |
| | | Backer layer ($\mu$m) | 0 | 160 | 0 | 0 | 0 | 0 | 0 | 0 | 0 | 0 |
| | x ($\mu$m) | | 160 | 320 | 220 | 260 | 300 | 320 | 350 | 260 | 300 | 100 |
| Content of flame retardant | The content (mass%) of flame retardant in layer containing flame retardant | | 0 | 20 | 0 | 0 | 20 | 20 | 20 | 10 | 10 | 0 |
| | Layer containing flame retardant | | None | Backer layer | None | None | Base sheet | Base sheet | Base sheet | Base sheet | Base sheet | None |
| | y (mass%) | | 0 | 10.7 | 0 | 0 | 7.2 | 8.1 | 9.2 | 4.1 | 3.6 | 0 |
| Reference | $y=0.00008x^2+0.016x-2.51$ | | 2.1 | 10.8 | 4.9 | 7.1 | 9.5 | 10.8 | 12.9 | 7.1 | 9.5 | -0.1 |
| Resistance againstspread of fire | Fire extinguishing properties | | ++ | ++ | ++ | - | - | - | ++ | - | - | ++ |
| | Fire Spread distance | | - | - | - | - | - | - | - | - | - | + |
| | Evaluation of resistance against spread of fire | | - | - | - | - | - | - | - | - | - | ++ |
| Scratch resistance | | | ++ | ++ | ++ | ++ | ++ | ++ | ++ | ++ | ++ | - |
| Wear resistance | | | ++ | ++ | ++ | ++ | ++ | ++ | ++ | ++ | ++ | - |
| Strength of layer containing non-halogen-based frame retardant | | | | ++ | | | ++ | ++ | ++ | ++ | ++ | |

17

Description of Reference Numerals

1. Decorative sheet
11. Synthetic resin backer layer
12. Base sheet
13. Picture pattern layer
14. Transparent resin layer
15. Surface-protecting layer
2. Base
21. Wooden plate
22. Surface material
101. Household heater
102. Strand of household heater
103. Rectangular metal strand
104. Metal frame
105. Test piece
106. End on the heater side in the longitudinal direction of the test piece.
107. Lighter
L1. Fire Spread distance

**Claims**

1. A decorative sheet for laminating on a base having a thermal conductivity of less than 0.1 W/(m·K) on a side to which the decorative sheet is bonded, wherein

    (1) the decorative sheet comprises non-halogen-based thermoplastic resin-containing layers,
    (2) at least one of the non-halogen-based thermoplastic resin-containing layers is a layer containing a non-halogen-based flame retardant,
    (3) the total thickness ($\mu$m) of the non-halogen-based thermoplastic resin-containing layers is referred to as x, the percentage (mass%) of the total mass of the non-halogen-based flame retardant in the non-halogen-based thermoplastic resin-containing layers in 100 mass% of the total mass of the non-halogen-based thermoplastic resin-containing layers is referred to as y, and x and y satisfy the following equation (I),

$$y \geq 0.00008x^2 + 0.016x - 2.51 \ (I),$$

    (4) the content of the non-halogen-based flame retardant in each of the layers containing a non-halogen-based flame retardant is 8 mass% or more.

2. The decorative sheet according to claim 1, wherein the non-halogen-based flame retardant is at least one member selected from phosphorus-based flame retardants or nitrogen-based flame retardants.

3. The decorative sheet according to claim 1 or 2, wherein the content of the non-halogen-based flame retardant in each of the layers containing a non-halogen-based flame retardant is 11 mass% or more.

4. The decorative sheet according to any one of claims 1 to 3, wherein the percentage y (mass%) of the total mass of the non-halogen-based flame retardant in the non-halogen-based thermoplastic resin-containing layers in 100 mass% of the total mass of the non-halogen-based thermoplastic resin-containing layers is 40 mass% or less.

5. The decorative sheet according to any one of claims 1 to 4, wherein the decorative sheet comprises a transparent resin layer as one of the non-halogen-based thermoplastic resin-containing layers, and the transparent resin layer has a thickness of 60 $\mu$m or more.

6. The decorative sheet according to any one of claims 1 to 5, further comprising a surface-protecting layer.

7. The decorative sheet according to claim 6, wherein the surface-protecting layer is an ionizing radiation curable resin layer.

8. The decorative sheet according to claim 7, wherein the ionizing radiation curable resin layer is an electron beam curable resin layer.

9. The decorative sheet according to any one of claims 6 to 8, wherein the surface-protecting layer has a thickness of 15 $\mu$m or more.

10. The decorative sheet according to any one of claims 6 to 9, wherein the surface-protecting layer comprises fine particles, and the fine particles have an average particle size greater than the thickness of the surface-protecting layer.

11. The decorative sheet according to claim 10, wherein the fine particles are in a form of a vesicle formed by a supercritical reverse phase evaporation method.

12. The decorative sheet according to any one of claims 1 to 11, wherein the decorative sheet has a total thickness of 150 $\mu$m or more.

13. The decorative sheet according to any one of claims 1 to 12, wherein the non-halogen-based flame retardant is in a form of a vesicle formed by a supercritical reverse phase evaporation method.

14. A decorative plate comprising the decorative sheet according to any one of claims 1 to 13 on a base, wherein the base has a thermal conductivity of less than 0.1 W/(m·K) on a side to which the decorative sheet is bonded.

15. The decorative plate according to claim 14, wherein the base comprises a cork layer on a decorative sheet side.

Fig. 1

Fig. 2

Fig. 3

Fig. 4

Fig. 5

Fig. 6

| | International application No. |
|---|---|
| **INTERNATIONAL SEARCH REPORT** | PCT/JP2018/036121 |

**A. CLASSIFICATION OF SUBJECT MATTER**

Int.Cl. B32B27/18(2006.01)i, B32B21/08(2006.01)i, B32B27/00(2006.01)i, E04B1/94(2006.01)i

According to International Patent Classification (IPC) or to both national classification and IPC

**B. FIELDS SEARCHED**

Minimum documentation searched (classification system followed by classification symbols)

Int.Cl. B32B, E04B1/62-1/99

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2015-182379 A (DAINIPPON PRINTING CO., LTD.) 22 October 2015, claims, paragraphs [0001]-[0009], [0013]-[0016], [0020]-[0036], [0043]-[0049], [0054]-[0067], [0073], [0087], examples (Family: none) | 1-15 |
| Y | JP 2017-019274 A (DAINIPPON PRINTING CO., LTD.) 26 January 2017, claims, paragraphs [0001]-[0006], [0016]-[0028], [0036]-[0065], [0098], examples (Family: none) | 1-15 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 27 November 2018 (27.11.2018) | 11 December 2018 (11.12.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

International application No.

PCT/JP2018/036121

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2016/076360 A1 (TOPPAN COSMO INC.) 19 May 2016, claims 1, 19, paragraphs [0048]-[0055] & JP 2016-168830 A & EP 3219488 A1, claims 1, 19, paragraphs [0048]-[0055] & US 2018/0186132 A1 & AU 2015347747 A & KR 10-2017-0084083 A & CN 107073913 A | 11, 13 |
| Y | JP 2007-100045 A (NAGAHAMA, Masamitsu) 19 April 2007, claims, paragraphs [0041], [0082]-[0083], [0086]-[0087], [0234]-[0235], [0240]-[0241] (Family: none) | 11, 13 |

Form PCT/ISA/210 (continuation of second sheet) (January 2015)

**INTERNATIONAL SEARCH REPORT**

International application No.

PCT/JP2018/036121

```
<Concerning the subject of the search>
```

(A) Claim 1 includes the wording "(2) at least one layer among a plurality of layers containing said nonhalogen thermoplastic resin contains a nonhalogen flame-retardant" and the wording "(4) a plurality of layers containing said nonhalogen flame-retardant". Thus, it is unclear whether there is at least one layer containing both a nonhalogen thermoplastic resin and a nonhalogen flame-retardant, or whether there are a plurality of such layers.

Thus, in this international search report, the search was carried out assuming that at least one such layer is present, in consideration of the description of paragraph "[0018]" of the specification.

(B) Claims 6-11 specify having a surface protection layer, but it is unclear whether, when the surface protection layer contains a nonhalogen thermoplastic resin, the surface protection layer should be considered the "layer containing the nonhalogen thermoplastic resin" of claim 1 (whether the thickness of the surface protection layer should be incorporated into $x$ of formula (I) of claim 1).

In addition, when the surface protection layer is not considered to be the "layer containing a nonhalogen thermoplastic resin", it is unclear how to determine whether the outermost layer of a cosmetic sheet, which has a layer containing a nonhalogen thermoplastic resin at the outermost layer and about which it is not explicitly stated that the outermost layer is the "surface protection layer", is the "surface protection layer".

Thus, the search for this international search report was carried out assuming that the layer containing a nonhalogen thermoplastic resin is included in "the layer containing a nonhalogen thermoplastic resin" regardless of the presence of the wording "surface protection layer".

Form PCT/ISA/210 (extra sheet) (January 2015)

**EP 3 689 602 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015182379 A